# EUROPEAN PATENT SPECIFICATION

(11) **EP 3 095 687 B1**
(45) Date of publication and mention of the grant of the patent: **22.08.2018**
(21) Application number: 14806107.0
(22) Date of filing: 12.09.2014
(51) Int. Cl.: B63B 35/38, B63B 5/14, B63B 35/44

(54) **FLOATING ISLAND**
SCHWIMMENDE INSEL
ÎLE FLOTTANTE

(30) Priority: 14.01.2014 RU 2014100964
(43) Date of publication of application: 23.11.2016
(73) Proprietor: Novikov, Aleksandr Aleksandrovich, Moscow 117393 (RU)
(72) Inventor: Novikov, Aleksandr Aleksandrovich, Moscow 117393 (RU)
(74) Representative: Nordmeyer, Philipp Werner
(86) International application number: PCT/RU2014/000682
(87) International publication number: WO 2015/108442

(56) References cited:
- AU-A- 1 863 683
- US-A- 5 421 282
- US-A- 5 740 753
- US-A1- 2005 274 312
- US-A1- 2011 064 525

## Description

The invention refers to constructions of floating islands intended for the arrangement of various objects, in particular, civil engineering for residential, scientific, production, cultural-entertainment and recreational purposes. The invention refers to oceanography and hydrology, in particular, to surface drifting and immovable floating islands, which may be used for various scientific researches, for location of supervision, research and rescue teams thereon, as sea resort or recreation facility, as well as comfortable place of human residence in the ocean etc.

The invention relates to the structure of floating island, formed on the basis of large-scale floating platform.

At present the idea of using sea or ocean surface as basic surface for the creation of floating islands is of great importance due to lack of area on the shore to solve some projects, as well as due to the fact that sea or ocean water itself is permanent and very powerful source of energy. The perspective of using water surface for the creation of structures of different area may turn out to become a development of a new trend of land exploration. Therefore famous developments of engineers and architects are in the focus, since standard design solutions are not always used in the course of designing of such projects, and in most cases these solutions are similar to constructing ships and other floating facilities. One of the main issues of such islands is the island's reaction to the behavior of surface water layer as floating facility. Heaving as a form of vibrational energy of great water area are transferred to floating facility, making it repeat or respond to one extent or another to such heaving of water mass. It leads (even at still surface of water area - calm sea) to variability of stable position of the island. If the island is a basic foundation for organization of residential or any other infrastructure, the minimized vibrations of the platform at a height of ten meters become sensible. For any architectural structures, which may be arranged on the above-water surface of a floating island, such systematic vibrations can influence the operational reliability of such structures. Therefore mechanical dampers, which should ensure stabilization on horizon of the floating island, are provided in modern projects of floating islands. Such dampers stabilize position of a pontoon part of the island. For example, side dampers enable island's movement upward-downward and sideway, going up and down with regard to horizon of water environment and water line of the island and damp energy of wave shocks. Lower stabilizers ensure stability of the island and the set working position at transverse and longitudinal moving of the island; a part of stabilizers together with a ballast act as counterweight aiming to return the island and its platform to its original position in the case of island's heel in transverse and longitudinal directions. Taking into account the limited possibilities of such mechanical dampers, zones with minimum disturbed condition of water space during the year and almost horizontal relief under the island are selected for construction of islands (to avoid free movement of the island with regard to reference point of the drift).

For example, it is known (published application RU 2010146052, 63B35/44, B63B35/58, published 20.05.2012) a floating island comprising a floating platform containing different units on the upper part thereof and at least one bell with Foucault's pendulum with an electricity generator installed on inner surface of the bell on the lower part. High demands to the lower part of the platform base preventing the arrangement of high bearing loads directly on the floating island, are the main problem in the creation of such structure.

It is known (patent RU 2457144, B63B35/44, B63B35/00, published 27.05.2012) a floating island comprising a floating base submerged into water environment, which is made from movable interconnected multiple parts. Every part of the base (having water-proof protection) in combination with adjacent parts forms an agglomeration and is made of reinforced heavy concrete. The island is provided with lower and lateral stabilizers, ensuring reference position and floating stability of the island. But complex structures and joints of central and peripheral agglomerations of the island with stabilizers do not enable the creation of a large-scale island of several hectares in size, characterized by high strength and durability.

Both known technical solutions refer to floating islands with small dimensions. The island's structure ensures their stable operation with regard to small weight loads on upper tier of the platform. But in the perspective it is desirable to develop a concept of creating floating islands of large area. But in practice the use of stabilizers is not effective for large islands, since stabilizers are already units with complex structural design, and the increase in number thereof along the perimeter of a large island or the increase in dimensions thereof will result in practical lack of possibility to establish a control system thereof (due to the fact that dynamic characteristics of the upper layer of water mass in different points may differ from each other both in magnitude and in disturbance vector). Therefore a new mechanism of stabilization of large area floating island should be developed.

At the same time scientists have found that a plastic island two times bigger than Texas is drifting in the Pacific Ocean. And 80 percent of this island comprises plastic wastes (article "Plastic Island instead of Floating Waste" http://www.novate.ru/blogs/140410/14531/). With such dimensions this plastic island does not seems to be sensitive to heaving of water surface of the ocean. Analysis of such state shows that it is a result of the absence of direct robust links between individual components of plastic island. These components (both individual things and randomly combined piles) are in direct interaction with water surface and execute a vibrational displacement as a reaction to disturbance in direction of the disturbance vector. But the reaction to a disturbance is stopped when contact with adjacent thing or a waste pile takes place and a certain stabilization of the position is observed. This stabilization keeps oscillatory process, but it does not repeat the oscillatory process of waves. Therefore it can be seen that the contact of two individual waste piles, each of which previously performed the displacement in accordance with wave-formation process, results in mutual damping of individual displacements with the formation of a new displacement process with new smaller amplitude. It may be treated as a new mechanism of stabilization, wherein the displacement and oscillation of an individual element contacting with another element, which is also performing displacement and oscillations, results in the formation of a new process of total displacement, but having characteristics which are lower than of initial processes. Such interaction in the case of large number of elements leads to mutual stabilization of total mass of elements due to composition of displacement vectors and summation of oscillation amplitudes.

US 5,421,282 discloses an artificial floating island including a floating structure formed from a plurality of hollow island modules.

US 2011/0064525 A1 discloses a floating hotel and especially a large, multi-functional, submergible star-rated hotel that is capable of floating on water.

This property has been taken into account in developing a floating berth-terminal disclosed in RU 2100249, B63B35/44, published 27.12.1997, comprising floating facilities having ground tackles and handling machinery, and every floating facility is made in the form of a ship comprising a body with cargo compartments having bottom, side and deck coverings and provided with superstructure; the upper deck covering of said superstructure is extended along the whole length of the ship, and superstructure's walls are made with cargo ports and are installed along the perimeter of cargo compartment openings, which are the continuation of side coverings and inter-compartment walls forming additional compartment space, whereas the inner part of superstructure is provided with handling mechanisms made in the form of a beam overhead travelling crane with consoles having guides installed along the central lateral plane of the ship on side walls of the superstructure, and the above-mentioned consoles are installed in superstructure with the possibility of being opened until the conjunction thereof with the corresponding consoles of overhead travelling crane of a neighboring ship with the possibility of forming a transport system for the performance of handling operations.

In this berth the floating facilities are interconnected with docking units, ensuring the compensation of displacements in three directions. In one of the variants they are made in the form of at least two resilient elements and a flexible connection (e.g. rope, sling etc.) having the ends fixed on one of the docking objects, and having a hinged joint with another docking object in its middle part, whereas resilient elements are located on both sides from the point of connection, i.e. hook or clamp. In order to exclude the influence of dynamic loads arising during the displacement of floating facilities relative to each other and/or relative to the base, e.g. at rocking, the ends of flexible connection are spring-actuated with regard to attaching points.

This solution is regarded as the closest prior art for claimed subject-matter.

Despite of the fact that this solution is aimed to organize the stabilization of the position of a berth-terminal, it does not give such result that can be achieved in the case of the exclusion of any connection of the berth with land. Mutual damping is a result of interaction of berth elements, which are not connected with the base. The occurrence of connection with land results in the formation of a support, i.e. an element that sustains all displacements (reaction torque support). In this connection all displacements of floating facilities eventually are transferred to floating facilities fasted to the land. This is explained by the fact that berth-terminal as a system is of the open-type, i.e. it has an external connection. And self-stabilization processes are inherent to closed systems, which exclude the possibility of transferring the displacement energy and oscillation to an external body. In fact it may be said that the presence of resilient connections in this berth-terminal does not provide the exclusion of mutual damping of displacements of individual floating facilities, but is used for the exclusion of impact interactions between boards of adjacent floating facilities (resilient elements contact with each other only at the moment when they touch each other when ships come close).

Besides, in the known berth-terminal system, the floating facilities are made in the form of a ship comprising a body with cargo compartments, having bottom, side and deck coverings and having a superstructure and the upper deck covering of said superstructure is extended along the whole length of the ship. It means that floating facility, in fact, is a ship, provided with systems ensuring buoyancy and keeping vertical position (heel) and superstructures. Such floating facilities without conversion cannot be used as a construction unit for forming a floating island, in which the superstructure surface is used as a basic surface for construction structures.

For floating islands made in the form of a closed system there is no need for organizing a mechanical stabilization system for the whole platform, since the superstructure surface area of such islands is by an order of magnitude greater than ship dimensions. From this it follows that the island itself may be arranged as an object of prismatic type, wherein transverse dimensions of the base are by at least an order of magnitude greater than the island thickness dimensions. Moreover, there is no need to organize a uniform robust base, as in the case of a ship (deck, body), and there emerges the possibility of arranging a common base comprising multiple small floating elements, each having two types of connection with an adjacent floating element: in the form of flexible and non-stretchable connection and in the form of resilient damping connection. It enables not only to solve the problem of stabilizing the island on the water surface, but to establish the principle of island area build-up by permanent addition of floating facilities. Besides, it is possible to achieve a serious increase in bearing capacity of an island. This offers opportunities for creating cities and infrastructure similar to municipal.

The invention is aimed to achieve a technical result consisting in the simplification of the island's structure and in the provision of the possibility of carrying useful load corresponding, for example, to double weight of the island itself, while providing its operational reliability and strength, durability at large size. This technical result can also be formulated in another way: increasing strength and durability, as well as buoyancy and steadiness of a floating island while providing labor saving (reducing structural complexity) for its structural construction.

This technical result is achieved by that a floating island comprises a partially submerged volumetric structure made from floating facilities with positive buoyancy which are connected with each other by a flexible non-stretchable link and a resilient damping link; said floating facilities are located adjacent to each other and are spaced from each other in horizontal direction, and every facility is a volumetric shallow structure with side walls, bottom and roof used as basic surface located above water level for installation of island infrastructure objects on it, and every floating facility is made in the form of a shallow tight unit having positive buoyancy and having a form of parallelepiped or prism with a height that is less than the length of either side of the base, and each wall of each floating facility located opposite to the wall of the adjacent floating facility is connected with said wall by means of a flexible non-stretchable link and a resilient damping link along the whole length of said wall, whereas said resilient damping link is made with the possibility of damping on at least two mutually perpendicular directions.

The specified features are essential and interrelated forming stable combination of essential features sufficient for achieving the required technical result.

The present invention is explained by a specific embodiment, which is not the only possible, but it clearly demonstrates the possibility of achieving the required technical result.
Fig.1 - general view of a floating facility;
Fig. 2 - cross-section of floating facility - shallow tight unit;
Fig. 3 - shows an example of connecting floating facilities with each other to form an island on water.

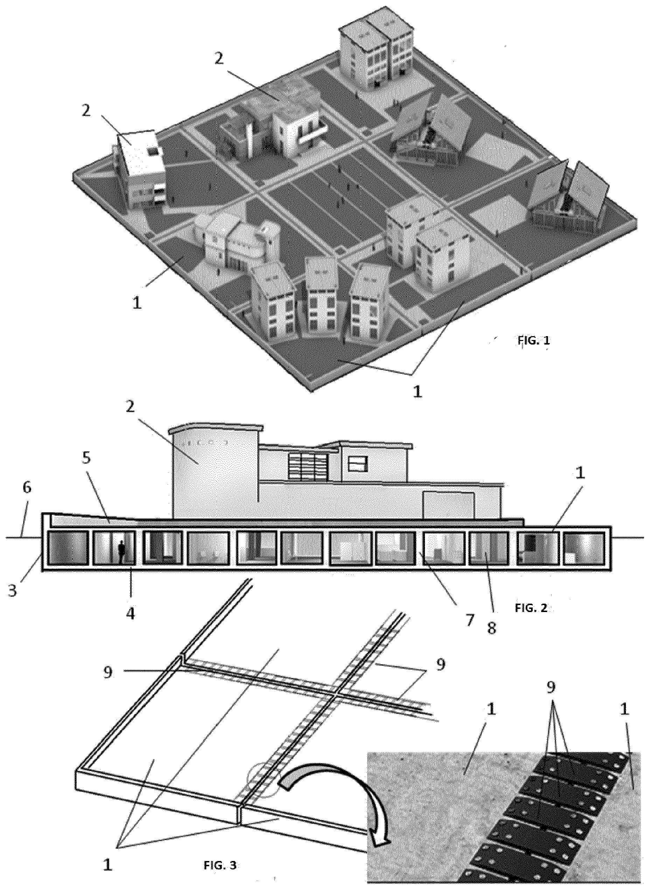

According to the present invention a new structure of floating island (fig. 1)is considered, comprising a partially submerged volumetric structure having underwater and above-water parts. This volumetric structure is made from a certain number of floating facilities 1, made with positive buoyancy. These floating facilities are connected with each other by means of a flexible a non-stretchable link and a resilient damping link. Flexible non-stretchable link is used to connect one floating facility to another to provide free movement of both floating facilities with regard to each other. Such connection also excludes the possibility of disconnection of one floating facility from another. In the floating island floating facilities are arranged adjacent to each other and are spaced from each other in horizontal direction. Hence, all floating facilities are interconnected forming an agglomeration, wherein all floating facilities form a single connected system, but they are still free to move within the boundaries defined by the length of a flexible non-stretchable link. This system is flexible, since its area can be increased by connecting new (additional) floating facilities or it can release those floating facilities, which operation is damaged or for the reduction of a total area of the system.

Every floating facility is a construction unit, which connects such units together to form an agglomeration of above-water surfaces, which are used for the arrangement (installation) of island infrastructure objects 2 on them.

Every floating facility is a shallow volumetric structure with side walls 3, bottom 4 and roof 5 used as a basic surface (deck, deck surface) and located above water level 6. Every floating facility is made in the form of a shallow tight unit, e.g. from ferro-concrete (e.g. cast reinforced concrete). The inner space of said unit is divided with partition walls 7 into sections 8, which also represent stiffening elements for reducing bending stress (fig. 2). In order to reduce bending deformations in units stiffening ribs may be formed. On horizontal surfaces of units such ribs may be located in mutually variable directions: upper and lower rib - at some distance from each other (stiffening ribs are located at least 6 m away from each other (upper from lower)). Stiffening ribs may be placed (installed) in the following order: upper rib - on upper horizontal surface and lower rib - at some distance spaced aside on lower horizontal surface. Ribs may have cellular structure.

The assembly has positive buoyancy and a shape of parallelepiped or prism with height not less than length of either side of the base. The assembly is a regular volumetric shape and it is preferable that all units, being parts of the island system, should be equal in structure (volume and dimensions) and shape. It is the most optimum option, as it ensures uniformity of oscillation processes in the system and possible forecasting of oscillations compensation algorithm between neighboring units.

In this system the process of quenching the oscillation between neighboring units is formed due to damping connection between them. Every wall of every floating facility located opposite the wall of adjacent floating facility is connected with this wall not only by a flexible non-stretchable link, but also by a resilient damping link along the whole length of this wall. This resilient damping connection is made with the possibility of damping on at least two mutually perpendicular directions.

The resilient damping connection between adjacent walls of assembles may be in the form of rubber-containing blocks 9, laid end on and fixed on above-water horizontal surfaces of adjacent shallow tight units and along their adjacent walls. Such resilient blocks can be made of rubber in the form of plates or in the form of pads and overlap the space between walls of neighboring units. As the result, as it is shown on fig. 3, rubber-containing resilient units are made in the form of bridges for moving from horizontal above-water surface of one shallow tight unit to above-water surface of another unit.

Such resilient blocks perform two functions. The first function - connecting units with each other due to the fact that one edge of a rubber plate is fixed on the surface of one unit and the other edge of the rubber plate is fixed on surface of the other adjacent unit. The second function - due to resilient characteristics of the material it is capable of bending, stretching, compressing and twisting to damp the unit displacements caused by the influence of water mass of sea or ocean surface layer on the unit. Since the unit is partially submerged into water and has positive buoyancy, it is exposed to surface waves and subsurface flows that causes certain oscillations of the unit which repeat the algorithm of wave oscillation.

Such construction ensures the transfer of oscillation process in which every unit is involved (as a construction unit) to neighboring units, which are subject to similar oscillation processes. In this case a part of the process energy is damped in resilient blocks and the remaining part as an oscillation function is combined with the same function of an adjacent unit. Combining two non-harmonic functions results in summing of amplitudes thereby the formation of a new oscillation process with significantly less amplitudes takes place. Thus a stabilization process is formed. Since each unit has a damping connection with four neighboring units in the central (non-peripheral) part of the island, the combination of five non-harmonic oscillation functions results in summing of amplitudes that leads to the practical stabilization of the island.

It is reasonable to use units unified in terms of dimensions and displacement of water in order to ensure the same level of raising the above-surface part of the island. Besides, units unified in terms of dimensions and displacement of water ensure similar oscillations that can be forecast. To increase the stabilization degree every unit should be provided with underwater means - position stabilizers.

Large-scale floating island made from multiple inter-connected units forms an agglomeration of shallow units having a shape of regular rectangular parallelepiped with a width and length that are significantly exceed its height, with geometrical dimensions ensuring positive buoyancy of every unit and the island in general. Inner cavities of shallow units comprise bunk rooms and technical rooms, provided with equipment required to keep life activity of the island. Inner cavities of shallow units can comprise rooms suitable for residence or for use as scientific laboratories, production workshops, cultural or entertainment facilities and sanitary institutions. The island is equipped with autonomous energy supply system for keeping life activity and moving the island in required directions over the water surface. Survival equipment of the island may comprise, in particular, a drain system ensuring the forced removal of condensation masses by means of suction pumps. Autonomous energy supply system can be performed with the use of wave energy, wind energy and sun energy transformation into electricity. Autonomous energy supply system can comprise, for example, a hydropneumatic equipment located between shallow units and transforming the movement of the units caused by wave movement.

By means of construction and strength calculations the dimensions of units that are maximum suitable for planned use have been revealed: width - 40 meters, length - 40 meters and height - 4 meters. The thickness equal to 1 meter of a molded wall of a unit ensures the functional use of inner cavities of units as residential and other rooms. Such dimensions and the construction of units from reinforced ferro-concrete allow every assembly and island as a whole carrying useful load, which equals, at least, to double own weight of a unit and an island as a whole. Unloaded island has a rated depth of submersion (depth settlement) of 1 m, the depth of submersion of fully equipped (loaded) island is 2 m. With at least 1600 m2 of useful area on horizontal surface of a unit the planned objects and structures may be located directly on surface of the island. Installations of solar batteries are also provided to convert solar energy into electricity, and wind-driven towers are provided to convert energy of air mass (wind) into electricity. The use of wind and solar batteries for producing electricity and reliable maintenance of floating island autonomy is provided on the basis of standard equipment and is mutually duplicating for different weather conditions (calm sea, sea disturbance accompanied with strong winds).

Units connected with connection elements should be spaced from each other at a distance of 0.2-0.4 m. This distance is determined by the above-mentioned dimensions of units taking into account the maximum possible deviation of a unit exposed to arriving wave. To use deviations of external rows between their external walls and the external walls of next rows, a hydraulic pneumatic equipment is installed which converts reciprocating mutual displacement of neighboring units' walls into electricity. All units are autonomous. The assembly (connection) of the island is performed by connecting units by means of damping elements by putting units afloat one by one. If required, any unit, external or internal, may be disconnected and submerged. It is done as follows: connecting (fixing) elements which connect units with each other are disconnected from the unit subject to submersion. Then tightness of the unit is disturbed - special windows, gates are opened or lower part of the assembly is destroyed. Reaching inner cavities water destroys positive buoyancy and floating stability of the unit and it slowly goes down to the bottom. If submersion is not required, the assembly may be left adrift. To prevent unauthorized submersion of the platform in general or partially, a survival equipment of the island may comprise, in particular, a drain system, located in inner cavities of units providing the force removal of condensation masses by means of suction pumps.

## Claims

1. A floating island comprising a partially submerged volumetric structure made from floating facilities (1) with positive buoyancy which are connected with each other by a flexible non-stretchable link and a resilient damping link; said floating facilities (1) are located adjacent to each other and are spaced from each other in horizontal direction, **characterized in that** every facility (1) is a volumetric shallow structure with side walls (3), bottom (4) and roof (5) used as basic surface located above water level for the installation of island infrastructure objects (2) on it, wherein every floating facility (1) is made in the form of a shallow tight unit having positive buoyancy and having a form of parallelepiped or prism with a height that is less than the length of either side of the base, and each wall (3) of each floating facility (1) located opposite to the wall (3) of the adjacent floating facility is connected with said wall (3) by means of a flexible non-stretchable link and a resilient damping link along the whole length of said wall (3), whereas said resilient damping link is made with the possibility of damping on at least two mutually perpendicular directions.

2. The floating island according to claim 1, **characterized in that** said unit is made of ferro-concrete.

3. The floating island according to claim 1, **characterized in that** the inner volume of said unit is divided with partition walls (7) into sections (8).

4. The floating island according to claim 1, **characterized in that** it is provided with autonomous energy supply system to keep life activities and to move on water surface.

5. The floating island according to claim 1, **characterized in that** the resilient damping link is made in the form of metal, rubber-containing and other resilient blocks laid end on and fixed on horizontal surfaces of adjacent shallow tight units above water and along their adjacent walls.

6. The floating island according to claim 5, **characterized in that** rubber-containing resilient blocks are made in the form of bridges for moving from horizontal above-water surface of one shallow tight unit to above-water surface of another unit.

7. The floating island according to claim 1, **characterized in that** it is provided with rubber-containing resilient dampers located between adjacent walls of shallow tight units.

8. The floating island according to claim 1, **characterized in that** horizontal surfaces of shallow tight units are provided with strengthening ribs.

9. The floating island according to claim 1, **characterized in that** shallow tight units comprise means for connecting and disconnecting from each other.

## Patentansprüche

1. Schwemminsel als eine ins Wasser teilweise gesenkte, aus Schwimmkörpern (1) mit positiver Schwimmfähigkeit hergestellte Raumkonstruktion, wobei die genannten Schwimmkörper (1) miteinander über eine flexible unausdehnbare Verbindung und eine elastische dämpfende Verbindung verbunden und einander angrenzend in horizontaler Richtung voneinander abstehend angeordnet sind, **dadurch gekennzeichnet, dass** jeweils einer der Schwimmkörper (1) eine hohle Raumkonstruktion mit Seitenwänden (3), einem Boden (4) und einer Deckel (5) ist, die eine Grundfläche darstellt, welche sich über dem Wasserspiegel zur Montierung darauf von Infrastruktureinrichtungen (2) der Insel befindet, wobei jeweils einer der Schwimmkörper (1) als eine hohle dichte Einheit mit positiver Schwimmfähigkeit und in Form eines echten Parallelepipeds bzw. eines echten Prismas mit einer Höhe, die kleiner als die Länge jeder der Basisseiten ist, ausgeführt ist und jede der Wand (3) des angrenzenden Schwimmkörpers entgegengesetzte Wand (3) jedes Schwimmkörpers (1) mit dieser Wand (3) über eine flexible unausdehnbare Verbindung und eine elastische dämpfende Verbindung, die sich über die ganze Länge dieser Wand (3) erstrecken, verbunden ist, wobei die genannte elastische dämpfende Verbindung mindestens in zwei um 90 Grad versetzten Richtungen dämpffähig ist.

2. Schwemminsel nach Anspruch 1, **dadurch gekennzeichnet, dass** die genannte Einheit aus Stahlbeton hergestellt ist.

3. Schwemminsel nach Anspruch 1, **dadurch gekennzeichnet, dass** der Innenraum der genannten Einheit durch Schottwände (7) in Abteilungen (8) geteilt ist.

4. Schwemminsel nach Anspruch 1, **dadurch gekennzeichnet, dass** sie mit einem unabhängigen Energieversorgungssystem zur Lebenserhaltung und zur Ortsänderung über Wasser ausgestattet ist.

5. Schwemminsel nach Anspruch 1, **dadurch gekennzeichnet, dass** die elastische dämpfende Verbindung als metallische gummihaltige elastische Bausteine, die mit Enden verlegt und an den über Wasser stehenden horizontalen Flächen der angrenzenden hohlen dichten Einheiten entlang deren angrenzenden Wänden angeordnet sind, ausgeführt ist.

6. Schwemminsel nach Anspruch 5, **dadurch gekennzeichnet, dass** die gummihaltigen elastischen Bausteine in Form der Brücken zum Übergang von der horizontalen über Wasser stehenden Fläche einer hohlen dichten Einheit auf die über Wasser stehende Fläche einer anderen angrenzenden hohlen dichten Einheit ausgeführt sind.

7. Schwemminsel nach Anspruch 1, **dadurch gekennzeichnet, dass** er gummihaltige elastische Dämpfer aufweist, die zwischen den angrenzenden Wänden der hohlen dichten Einheiten angeordnet sind.

8. Schwemminsel nach Anspruch 1, **dadurch gekennzeichnet, dass** die horizontalen Flächen der hohlen dichten Einheiten mit Verstärkungsrippen versehen sind.

9. Schwemminsel nach Anspruch 1, **dadurch gekennzeichnet, dass** die hohlen dichten Einheiten mit Vorrichtungen zur gegenseitigen An- bzw. Abkupplung versehen sind.

## Revendications

1. Ilot flottant lequel est une structure en trois dimensions partiellement immergée, constituée d'éléments flottants (1) à flottabilité positive, qui sont reliés entre eux par une liaison inextensible souple et par une liaison d'amortissement élastique, cela étant, lesdits éléments flottants (1) sont disposés de manière adjacente les uns par rapport aux autres et à une certaine distance les uns des autres dans la direction horizontale, **caractérisé en ce que** chacun d'entre eux (1) est une structure creuse en trois dimensions munie des parois (3) latérales, d'un fond (4) et d'un toit (5) étant la surface de base qui se trouve au-dessus du niveau de l'eau pour y monter les objets de l'infrastructure insulaire (2), cela étant, chaque élément flottant (1) est configuré comme une unité hermétique creuse ayant une flottabilité positive et la forme d'un parallélépipède régulier ou d'un prisme régulier avec une hauteur inférieure à la longueur de tout côté de la base, et chaque paroi (3) de chaque élément flottant (1) située en face de la paroi (3) de l'élément flottant disposé de manière adjacente est associée à cette paroi (3) par une liaison inextensible souple et par une liaison d'amortissement élastique sur toute la longueur de cette paroi (3), cela étant, ladite liaison d'amortissement élastique est configurée pour être amorti au moins sur deux directions mutuellement perpendiculaires.

2. Ilot flottant selon la revendication 1, **caractérisé en ce que** ladite unité est conçu en béton armé.

3. Ilot flottant selon la revendication 1, **caractérisé en ce que** le volume interne de ladite unité est divisé par des cloisons (7) en compartiments (8).

4. Ilot flottant selon la revendication 1, **caractérisé en ce qu'**il est équipé d'un système d'alimentation autonome pour supporter la vie et le mouvement sur la surface de l'eau.

5. Ilot flottant selon la revendication 1, **caractérisé en ce que** la liaison d'amortissement élastique est configurée sous la forme des unités métalliques élastiques contenant du caoutchouc posées par les extrémités et fixées sur les surfaces horizontales creuses saillies au-dessus de l'eau des unités hermétiques disposées de manière adjacente le long de leur parois adjacentes.

6. Ilot flottant selon la revendication 1, **caractérisé en ce que** les unités élastiques contenant du caoutchouc sont configurées sous la forme de ponts pour passer de la surface horizontale émergée d'une unité hermétique creuse à la surface émergée d'une autre unité hermétique creuse disposée de manière adjacente.

7. Ilot flottant selon la revendication 1, **caractérisé en ce qu'**il est muni d'amortisseurs élastiques contenant du caoutchouc placés entre les parois adjacentes des unités hermétiques creuses.

8. Ilot flottant selon la revendication 1, **caractérisé en ce que** des raidisseurs sont prévus sur les surfaces horizontales des unités hermétiques creuses.

9. Ilot flottant selon la revendication 1, **caractérisé en ce que** les unités hermétiques creuses sont munies de moyens de fixation et de détachement les unes des autres.
